# EUROPEAN PATENT APPLICATION

(11) **EP 4 517 648 A1**
(43) Date of publication of application: **05.03.2025**
(21) Application number: 23194587.4
(22) Date of filing: 31.08.2023
(51) Int. Cl.: G06T 3/4053, G06T 3/4046, G06T 11/00, G06T 15/08

(54) **OBLIQUE MULTIPLANAR RECONSTRUCTION OF THREE-DIMENSIONAL MEDICAL IMAGES**

(71) Applicant: Koninklijke Philips N.V., 5656 AG Eindhoven (NL)
(72) Inventor: WUELKER, Christian, Eindhoven (NL)
(74) Representative: Philips Intellectual Property & Standards

(57) **Abstract**

Disclosed herein is a medical system (100, 300). The execution of machine executable instructions (122) causes a computational system (110) to: receive (200) a three-dimensional medical image (124) descriptive of internal anatomy of a subject (318); receive (202) a set of initial coordinates (126) of an initial oblique plane (700) located within the three-dimensional medical image; calculate (204) an initial two-dimensional sectional image (128) of the three-dimensional medical image by interpolating the three-dimensional medical image to the initial oblique plane, wherein the initial two-dimensional sectional image has the first resolution; receive (206) an initial upscaled image (130) in response to inputting the initial two-dimensional sectional image into a super resolution module (124); and provide (208) the initial upscaled image as an initial oblique multiplanar reconstruction (130) of the three-dimensional medical image.

## Description

### FIELD OF THE INVENTION

The invention relates to medical imaging.

### BACKGROUND OF THE INVENTION

Multiplanar reformation/reconstruction (MPR) refers to the process of computing two-dimensional (2D) slice images with different orientations from a three-dimensional (3D) or multi-slice image. MPRs may have axial, sagittal, or coronal orientation, but they may also be oblique. Oblique MPRs play an important role, e.g., in Angiography, where vessels are traced and planar 2D images are computed that orthogonally transect the vessel along its axis.

The publication Sung, KH, "A novel artificial intelligence technique for generating through-plane super-resolution MRI images," UCLA Radiology, p. 6, Summer 2022, https://www.uclahealth.org/sites/default/files/documents/df/2022S_AI-Generates-Better-MRI-Through-Plane-Images.pdf, discloses a method of generating through-plane high resolution MRI images using generative artificial intelligence.

### SUMMARY OF THE IVENTION

The invention provides for a medical system, a computer program, and a method in the independent claims. Embodiments are given in the dependent claims.

In one aspect the invention provides for a medical system that comprises a memory storing machine-executable instructions and a super resolution module. The super resolution module is configured to output an image at a second resolution in response to receiving the image at a first resolution. The second resolution is higher than the first resolution. The medical system further comprises a computational system. Execution of the machine-executable instructions causes the computational system to receive a three-dimensional medical image descriptive of an internal anatomy of a subject.

Execution of the machine-executable instructions further causes the computational system to receive a set of initial coordinates of an initial oblique plane located within the three-dimensional medical image. Execution of the machine-executable instructions further causes the computational system to calculate an initial two-dimensional sectional image of the three-dimensional medical image by interpolating the three-dimensional medical image to the initial oblique plane. The initial two-dimensional sectional image has the first resolution. The area where the initial oblique plane intersects the three-dimensional medical image is interpolated to the initial two-dimensional sectional image. Execution of the machine-executable instructions further causes the computational system to receive an initial upscaled image in response to inputting the initial two-dimensional sectional image into the super resolution module. Execution of the machine-executable instructions further causes the computational system to provide the initial upscaled image as an initial oblique multiplanar reconstruction of the three-dimensional medical image.

In another aspect the invention provides for a method of medical imaging. The method comprises receiving a three-dimensional medical image that is descriptive of an internal anatomy of a subject. The method further comprises receiving a set of initial coordinates of an initial oblique plane located within the three-dimensional medical image. The method further comprises calculating an initial two-dimensional sectional image of the three-dimensional medical image by interpolating the three-dimensional medical image to the initial oblique plane. The initial two-dimensional sectional image has the first resolution.

The method further comprises receiving an initial upscaled image in response to inputting the initial two-dimensional sectional image into a super resolution module. The super resolution module is configured to output an image at the second resolution in response to receiving the image at the first resolution. The second resolution is higher than the first resolution. The method further comprises providing the initial upscaled image as an initial oblique multiplanar reconstruction of the three-dimensional medical image.

In another aspect, the invention provides for a computer program comprising a super resolution module and machine-executable instructions for execution by a computational system configured to control or operate a medical system. The super resolution module is configured to output an image at a second resolution in response to receiving the image at a first resolution. The second resolution is higher than the first resolution.

Execution of the machine-executable instructions causes the computational system to receive a three-dimensional medical image descriptive of an internal anatomy of a subject. Execution of the machine-executable instructions further causes the computational system to receive a set of initial coordinates of an initial oblique plane located within the three-dimensional medical image. Execution of the machine-executable instructions further causes the computational system to calculate an initial two-dimensional sectional image of the three-dimensional medical image by interpolating the three-dimensional medical image to the initial oblique plane. The initial two-dimensional sectional image has the first resolution.

Execution of the machine-executable instructions further causes the computational system to receive an initial upscaled image in response to inputting the initial two-dimensional sectional image into the super resolution module. Execution of the machine-executable instructions further causes the computational system to provide the initial upscaled image as an initial oblique multiplanar reconstruction of the three-dimensional medical image.

### BRIEF DESCRIPTION OF THE DRAWINGS

In the following preferred embodiments of the invention will be described, by way of example only, and with reference to the drawings in which:
Fig. 1 illustrates an example of a medical system.
Fig. 2 shows a flow chart which illustrates a method of using the medical system of Fig. 1.
Fig. 3 illustrates a further example of a medical system.
Fig. 4 shows a flow chart which illustrates a method of using the medical system of Fig. 3.
Fig. 5 illustrates an example of an image processing neural network.
Fig. 6 illustrates a further example of an image processing neural network.
Fig. 7 illustrates the position of an initial oblique plane and a modified oblique plane with respect to a three-dimensional medical image.

### DESCRIPTION OF EMBODIMENTS

Like numbered elements in these figures are either equivalent elements or perform the same function. Elements which have been discussed previously will not necessarily be discussed in later figures if the function is equivalent.

Often times, physicians or other medical professionals would like to freely choose a two-dimensional viewing plane within a three-dimensional medical image. Examples may be beneficial because the initial oblique multiplanar reconstruction of the three-dimensional medical image may be calculated extremely quickly. This for example may be useful in viewing portions of the internal anatomy from a particular plane or view. Instead of performing the upscaling before determining the initial oblique multiplanar reconstruction, as is conventionally done, the algorithm first calculates the initial two-dimensional sectional image and then upscales it. This greatly reduces the computational overhead in comparison to currently used algorithms. As the initial oblique multiplanar reconstruction is interpolated at the first resolution such an interpolation may be calculated extremely quickly and with a low computational overhead.

A super resolution module as used herein encompasses a software module that is able to receive an image of a first resolution and output a version of the image at a second resolution. The second resolution is higher than the first resolution. In other words, a super resolution module is a module that is used to increase the resolution of an image.

The three-dimensional medical image could for example be a three-dimensional dataset or it could be a so-called stack of two-dimensional slices.

The initial oblique plane is a label used for an oblique plane which spans the three-dimensional medical image. The set of initial coordinates could be specified in different ways. For example, the three-dimensional medical image may have its own three-dimensional coordinate system. The set of initial coordinates could for example indicate the intersection of the initial oblique plane with the axis of this coordinate system. There are however a large number of ways of specifying the set of initial coordinates which are mathematically equivalent.

In another example, execution of the machine-executable instructions further causes the computational system to render the initial oblique multiplanar reconstruction on a display. Execution of the machine-executable instructions further causes the computational system to receive a set of modified coordinates of a modified oblique plane located within the three-dimensional medical image from a user interface. Execution of the machine-executable instructions further causes the computational system to calculate a sequence of intermediate coordinates by interpolating between the set of initial coordinates and the set of modified coordinates. For example, there may be values which are used to specify the initial coordinates of the initial oblique plane and the coordinates which specify the modified coordinates of the modified oblique plane.

These coordinates may be independently interpolated to provide the sequence of intermediate coordinates. For example, it may be decided to have three, four, five or a number of intermediate coordinates. Execution of the machine-executable instructions further causes the computational system to step through the sequence of intermediate coordinates repeatedly for each step. That is to say, for each of the sequence of intermediate coordinates the steps are repeated. The first step is to calculate a sequential two-dimensional sectional image of the three-dimensional medical image specified by a sequential plane. The sequential plane is specified by the sequence of intermediate coordinates.

The two-dimensional sectional image has the first resolution. The next step is to receive a sequential upscaled image in response to inputting the sequential two-dimensional sectional image into the super resolution module. The next step is to provide a sequential upscaled image as an intermediate oblique multiplanar reconstruction of the three-dimensional medical image. The final step is to render the intermediate oblique multiplanar reconstruction on the display to provide an animation during the repeated step through the sequence of intermediate coordinates.

This example may be beneficial because the interpolation and upscaling steps may be performed so rapidly that the animation may be provided as the individual intermediate oblique multiplanar reconstructions are calculated. This may enable one to enter the set of modified coordinates and then provide an animation essentially in real time to move the transitions from the initial oblique multiplanar reconstruction to the modified oblique plane. This may be particularly useful when a physician or other medical professional is using this to explore the data and to try to find the right coordinates to position an oblique plane to view the three-dimensional medical image from a desired two-dimensional plane. It enables the smooth transition between the two coordinates with a low computational overhead.

In another example, execution of the machine-executable instructions further causes the computational system to step through the sequence of intermediate coordinates to render the intermediate oblique multiplanar reconstruction such that the animation has a frame rate of at least 10 frames per second.

In another example, execution of the machine-executable instructions further causes the computational system to step through the sequence of intermediate coordinates to render the intermediate oblique multiplanar reconstruction such that the animation has a frame rate of at least 20 frames per second.

In another example, execution of the machine-executable instructions further causes the computational system to step through the sequence of intermediate coordinates to render the intermediate oblique multiplanar reconstruction such that the animation has a frame rate of at least 30 frames per second.

In another example, the super resolution module comprises an image processing neural network. The image processing neural network is an image upscaling neural network that is configured to output an image at a second resolution in response to receiving the image at the first resolution. The image processing neural network in this example could for example be a convolutional neural network such as a feed forward convolutional neural network, a U-Net, or a ResDenseNet in some examples. Other architectures of neural network may also be used, including network architectures that are not or only partly based on convolutions, such as a transformer neural network. The input to the neural network may be configured to receive the input image at the first resolution and then in response provide the output image at the second resolution. Images with the second resolution can be used to artificially generate input images at the first image resolution by an algorithmic interpolation process. These pairs of images at the first and second resolution may then be used as training data and conventional techniques such as deep learning may then be used to train the image processing neural network. Training may be done in supervised, unsupervised, self-supervised, or partially supervised manner.

In another example, the super resolution module comprises an image processing neural network that is configured to output an image with an improved image metric in response to receiving an input image. The super resolution module is configured to output an image at a second resolution in response to receiving the image at the first resolution by first calculating a temporary image by interpolating the image received at the first resolution to the second resolution. The interpolation could for example be calculate using a bilinear or bicubic upsampling. As part of the super resolution module, the image processing neural network is further configured to provide second temporary image with the improved image metric in response to the first temporary image being input into the image processing neural network. The super resolution module is further configured to provide the second temporary image as the output image of the super resolution module.

In this example, the upscaling is performed by first doing an interpolation step and then using the image processing neural network to improve the quality of this interpolated image. An advantage to doing this technique is that the first and second resolution may essentially be arbitrarily chosen. The image processing neural network in this example may for example be a U-Net, a ResNet, or a different type of convolutional neural network. The training data may be to take an image with the higher resolution, such as the second resolution, and then to artificially reduce the quality of the image. For example, to first reduce the resolution of the image and then to produce an interpolated image which then has a reduced image quality or image metric. The training data above is described in the context of one image, but it is understood that this may be applied to a large number of images to train the image processing neural network.

In another example, the improved image metric comprises an improved sharpness.

In another example, the improved image metric comprises an improved signal-to-noise ratio.

In another example, the improved image metric comprises a reduced blurring.

In another example, the super resolution module is configured to adjust the second resolution output by the super resolution module by modifying the interpolation of the first temporary image. The relationship between the first resolution and the second resolution can be changed by adjusting the interpolation. This may provide for a more flexible means of upscaling images.

In another example the image processing neural network is configured to ignore noise. In other words, the image processing neural network may be trained to ignore noise. This may be achieved by artificially adding noise to images that are input into the image processing neural network during training. As the original or ground truth image does not have this added noise to it, the image processing neural network will be naturally configured to ignore the noise.

In another example, the image processing neural network is configured to receive a set of coordinates descriptive of the image received at the first resolution as input. The image processing neural network may be the image processing neural network for the conventional upscaling neural network or the image processing neural network used after interpolation to improve the image metric. In both cases, the set of coordinates may be used to define the location of the plane upon which the input image lies.

There are therefore two different cases. In the first case, the image processing neural network is an upscaling neural network and it receives as input the image of the first resolution and outputs the image of the second resolution. To construct the training data the ground truth image is taken from a three-dimensional medical image or other three-dimensional image that has the second resolution. The three-dimensional medical image then has a cross-section, which corresponds to the plane at the set of coordinates and this is the ground truth image. This three-dimensional medical image data may then be downscaled to the first resolution and the input image may be interpolated for the first resolution. These pairs of images may then be used to train the image processing neural network.

In the second case, there is an interpolation step performed before the improvement of the image metric. In this case, a three-dimensional medical image with the second resolution is started with again. The image which lies on the set of coordinates is then calculated to produce the ground truth image again. The three-dimensional medical image is then downscaled to the first resolution and an interpolation is performed to obtain the test or trial image at the first resolution for the set of coordinates.

In another example, the three-dimensional medical image is a three-dimensional magnetic resonance image. The medical system further comprises a magnetic resonance imaging system. The memory further stores pulse sequence commands configured for controlling the magnetic resonance imaging system to acquire k-space data. The image processing neural network is configured to receive the k-space data as input. Execution of the machine-executable instructions further causes the computational system to control the magnetic resonance imaging system with the pulse sequence commands to acquire the k-space data. Execution of the machine-executable instructions further causes the computational system to reconstruct the three-dimensional magnetic resonance image or multi slice image from the k-space data.

Execution of the machine-executable instructions further causes the computational system to input at least a portion of the k-space data into the image processing neural network while inputting the first temporary image into the image processing neural network. In this example, the image processing neural network is configured to not only receive the input image but also at least a portion of the k-space data for the full three-dimensional medical resonance image. This may be beneficial because it then provides additional data which may be useful in scaling the image correctly.

To receive the at least a portion of the k-space data as the input, the training of the image processing neural network will be adjusted. The training data will be prepared as was detailed as above, except that the three-dimensional medical images will be magnetic resonance images and the original k-space data (or a portion of the k-space data) will also be input into the image processing neural network during training.

This mechanism of k-space consistency ensures that the measurements taken during data acquisition in k-space are not altered by Super-resolution. In other words, the Super-resolution network will (implicitly) perform k-space extrapolation to higher frequencies (it may still operate in the image domain) due to training of the neural network. The additional input to the algorithm could be the coordinates of the measurement area in k-space, so that consistency of the output with the measured data can be enforced in that area.

In another example the image processing neural network is configured to perform Gibbs-ringing removal from the image output at the second resolution. This may be achieved by artificially adding Gibbs-ringing artifacts to the trial image during training.

In another example, the image processing neural network is configured to perform magnetic resonance imaging artifact removal from the image output at the second resolution. This may be achieved by training the image processing neural network with a trial image that has artificially added a magnetic resonance imaging artifact to it.

In another example, the three-dimensional medical image is a three-dimensional computed tomography image.

In another example, the three-dimensional medical image is a three-dimensional C-arm computed tomography image.

In another example, the three-dimensional medical image is a three-dimensional ultrasound image.

In another example, the three-dimensional medical image is a three-dimensional positron emission tomography image.

In another example, the three-dimensional medical image is a three-dimensional single-photon emission tomography image.

In another example, the medical system further comprises a medical imaging system. Execution of the machine-executable instructions further causes the computational system to acquire the three-dimensional medical image descriptive of the internal anatomy of the subject.

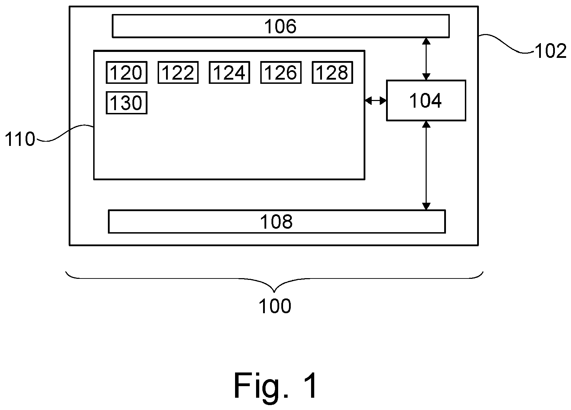

Fig. 1 illustrates an example of a medical system 100. The medical system 100 is shown as comprising a computer 102 which has a computational system 104. The computer 102 is intended to represent one or more computers that may be located at one or more locations. Likewise, the computational system 104 may represent one or more computational systems and/or processing cores at one or more locations. The computer 102 is further shown as containing an optional hardware interface 106. The hardware interface 106 may be used to control other components of the medical system 100 if they are present. The computer 102 is further shown as comprising a user interface 108 and a memory 110. The user interface 108 may for example provide a display for rendering data. The memory 110 is intended to represent various types of memory which are accessible to the computational system 104.

The memory 110 is shown as comprising machine-executable instructions 120. The machine-executable instructions 120 enable the computational system 104 to perform such tasks as data and image manipulation as well as controlling other components of the medical system 100 if they are present. The memory 110 is further shown as containing a super resolution module 122. The super resolution module 122 is configured to take an image of a first resolution and output an image of a second resolution. It is configured to increase the resolution of an image. The memory 110 is further shown as containing a three-dimensional medical image 124. The memory 110 is further shown as containing initial coordinates for an initial oblique plane 126 that is positioned within the three-dimensional medical image 124. This is the location of a two-dimensional section. The memory 110 is further shown as containing an initial upscaled image 130 that is an initial oblique multiplanar reconstruction which has a second resolution. It is identical with the initial two-dimensional sectional image 128 except the initial two-dimensional sectional image 128 has a first resolution.

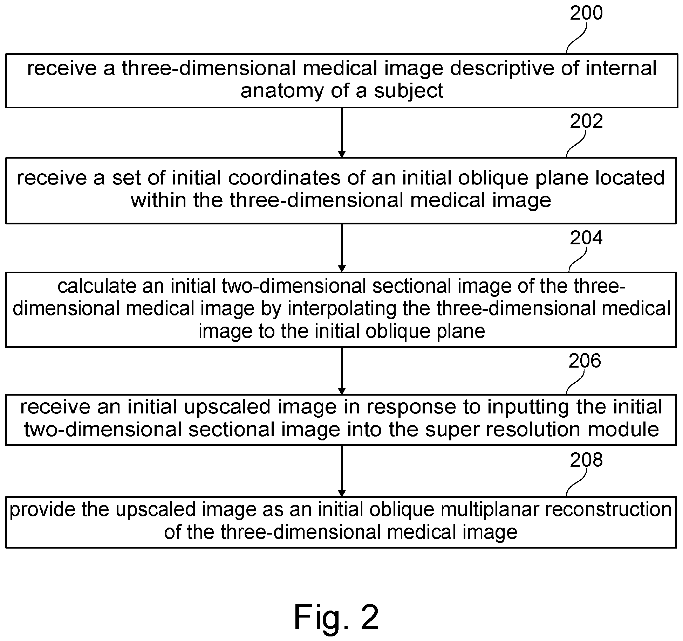

Fig. 2 shows a flowchart which illustrates a method of operating the medical system 100 illustrated in Fig. 1. In step 200, the three-dimensional medical image 124 is received. The three-dimensional medical image 124 is descriptive of an internal anatomy of a subject. In step 202, the set of initial coordinates are received. The set of initial coordinates 126 are used to define the location of a plane for an initial oblique plane within the three-dimensional medical image 124. This initial oblique plane is used to make a cross-sectional view or two-dimensional view of the three-dimensional medical image 124. In step 204, the initial two-dimensional sectional image 128 is calculated by interpolating the three-dimensional medical image 124 to the initial oblique plane specified by the set of initial coordinates 126.In step 206, the initial upscaled image 130 is received in response to inputting the initial two-dimensional sectional image 128 into the super resolution module 122. In step 208, the initial upscaled image 130 is provided as an initial oblique multiplanar reconstruction of the three-dimensional medical image 124. The labels initial in the initial oblique multiplanar reconstruction, the initial two-dimensional sectional image, and the set of initial coordinates is intended as a label.

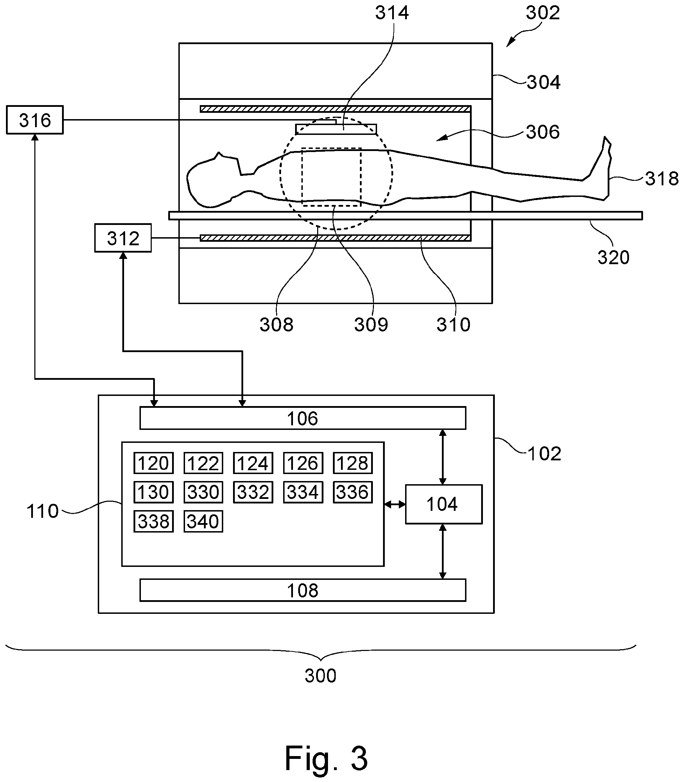

Fig. 3 illustrates a further example of a medical system 300. The medical system 300 depicted in Fig. 3 is similar to the medical system 100 depicted in Fig. 1 except that it additionally comprises a magnetic resonance imaging system 302. In Fig. 3, an example is illustrated using a magnetic resonance imaging system 302. However, examples may be constructed using other types of medical imaging systems such as: a positron emission tomography system, a single photon emission tomography system, a three-dimensional ultrasound system, and a computed tomography system.

The magnetic resonance imaging system 302 comprises a magnet 304. The magnet 304 is a superconducting cylindrical type magnet with a bore 306 through it. It is also possible to use both a split cylindrical magnet and a so-called open magnet. A split cylindrical magnet is similar to a standard cylindrical magnet, except that the cryostat has been split into two sections to allow access to the isoplane of the magnet, such magnets may for instance be used in conjunction with charged particle beam therapy. An open magnet has two magnet sections, one above the other with a space in-between that is large enough to receive a subject. The arrangement of the two sections area is similar to that of a Helmholtz coil. Open magnets are popular because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The k-space data are acquired for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for the acquisition of measured k-space data to spatially encode magnetic spins within the imaging zone 308 of the magnet 304. The magnetic field gradient coils 310 are connected to a magnetic field gradient coil power supply 312. The magnetic field gradient coils 310 are intended to be representative. Typically, magnetic field gradient coils 310 contain three separate sets of coils for spatial encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio frequency coil 314 is connected to a radio frequency transceiver 316. The radio frequency coil 314 and radio frequency transceiver 316 may be replaced by separate transmit and receive coils and a separate transmitter and receiver. It is understood that the radio frequency coil 314 and the radio frequency transceiver 316 are representative. The radio frequency coil 314 is intended to also represent a dedicated transmit antenna and a dedicated receive antenna. Likewise, the transceiver 316 may also represent a separate transmitter and receiver. The radio frequency coil 314 may also have multiple receive/transmit elements and the radio frequency transceiver 316 may have multiple receive/transmit channels. The transceiver 316 and the gradient controller 312 are shown as being connected to the hardware interface 106 of the computer system 102.

The memory 110 is further shown as containing pulse sequence commands 330. The pulse sequence commands are commands or data which may be converted into commands for controlling the magnetic resonance imaging system according to a magnetic resonance imaging protocol to acquire k-space data. The memory 110 is further shown as containing k-space data 332 that has been acquired by controlling the magnetic resonance imaging system 302 with the pulse sequence commands 330. The three-dimensional medical image 124 in this case has been reconstructed from the k-space data 332. The k-space data 332 may be k-space data for a three-dimensional volume or it may be k-space data for individual slices which are used to form the three-dimensional medical image 124.

The memory 110 is further shown as containing a set of modified coordinates 334 for a modified oblique plane located within the three-dimensional medical image 124. The labels initial and modified are used to differentiate the various planes and coordinates from each other. The memory 110 is further shown as containing a sequence of intermediate coordinates 336 that form a sequence of coordinates that transition from the set of initial coordinates 126 to the set of modified coordinates. This may for example be constructed by using a linear transformation that smoothly transitions from one set of coordinates to the other. The memory 110 is further shown as containing a sequential two-dimensional sectional image 338 for a particular set of coordinates of the sequence of intermediate coordinates 336. The memory 110 is further shown as containing a sequential upscaled image 340 that was calculated by upscaling the sequential two-dimensional sectional image 338.

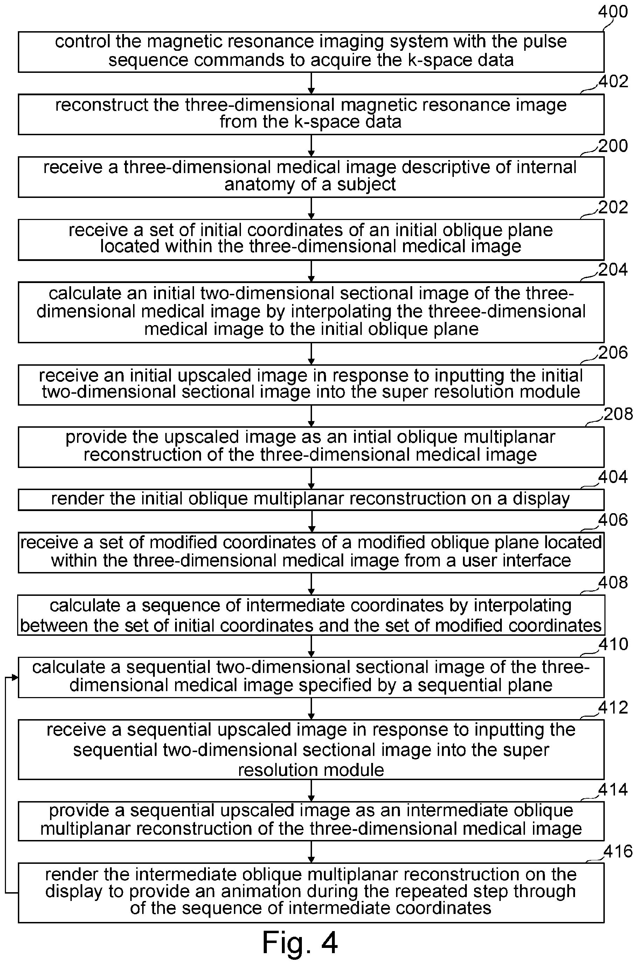

Fig. 4 shows a flowchart which illustrates a method of operating the medical system 300 of Fig. 3. In step 400, the magnetic resonance imaging system 302 is controlled with the pulse sequence commands 330 to acquire the k-space data 332. Next, in step 402, the three-dimensional magnetic resonance image, which is in this case the three-dimensional medical image 124, is reconstructed from the k-space data 332. Steps 200, 202, 204, 206, and 208 are performed as is illustrated in Fig. 2. In step 404, the initial oblique multiplanar reconstruction 130 is rendered on a display 108. In step 406, the set of modified coordinates 334 is received. The set of modified coordinates 334 defines the location of a modified oblique plane located within the three-dimensional medical image 124. In step 408, the sequence of intermediate coordinates 336 is calculated from the set of modified coordinates 334 and the set of initial coordinates 126.

Steps 410, 412, 414, and 416 are then repeated for each member of the sequence of intermediate coordinates. In step 410, the sequential two-dimensional sectional image 338 is calculated. In step 412, the sequential upscale image 340 is received in response to inputting the sequential two-dimensional sectional image to the super resolution module 122. In step 414, the sequential upscaled image 340 is provided as an intermediate oblique multiplanar reconstruction 340. In step 416, the intermediate oblique multiplanar reconstruction 340 is rendered on the display 108 to provide an animation during the repeated step through the sequence of intermediate coordinates. The method then proceeds from step 416 back to step 410 until all of the sequence of intermediate coordinates has been stepped through.

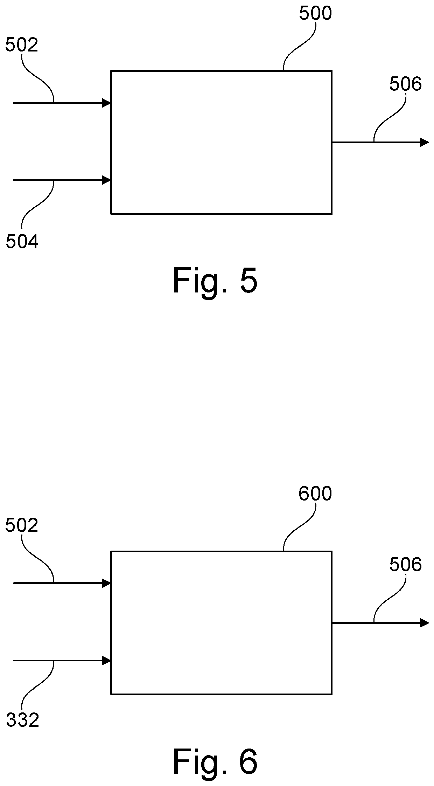

Fig. 5 illustrates a view of an image processing neural network 500. The image processing neural network 500 is configured to receive an input image 502 and a set of coordinates 504 that may be either the set of initial coordinates 126 or the coordinates selected from the sequence of intermediate coordinates 336. In response to receiving the input image 502 and the coordinates 504, the image processing neural network 500 outputs the output image 506. There are two different variants of the image processing neural network 500 illustrated by Fig. 5. In one example, the image processing neural network 500 is an upscaling neural network. In this case the input image 502 has the first resolution and the output image 506 has the second resolution. The output image 506 is an upscale of the input image 502. The image processing neural network 500 has been trained such that the coordinates 504 indicate the location of the plane of the input image 502 and this assists in calculating the output image 506.

The second variation is where the input image 502 is the first temporary image and the output image 506 is the second temporary image and both the input image 502 and the output image 506 have the same resolution. The output image 506 has an improved image metric. The coordinates 504 in this case are again, coordinates which define the position of the plane for the input image 502.

Fig. 6 illustrates a further example of an image processing neural network 600. The image processing neural network 600 again receives the input image 502 and outputs in response an output image 506. In this case, at least a portion of the k-space data 332 is received as input.

The image processing neural network 600 illustrated in Fig. 6 again has two variants. In the first variant the input image 502 has the first resolution and the output image 506 has the second resolution. In the second variation, the input image 502 and the output image 506 both have the second resolution and the output image 506 again has an improved image metric with respect to the input image 502.

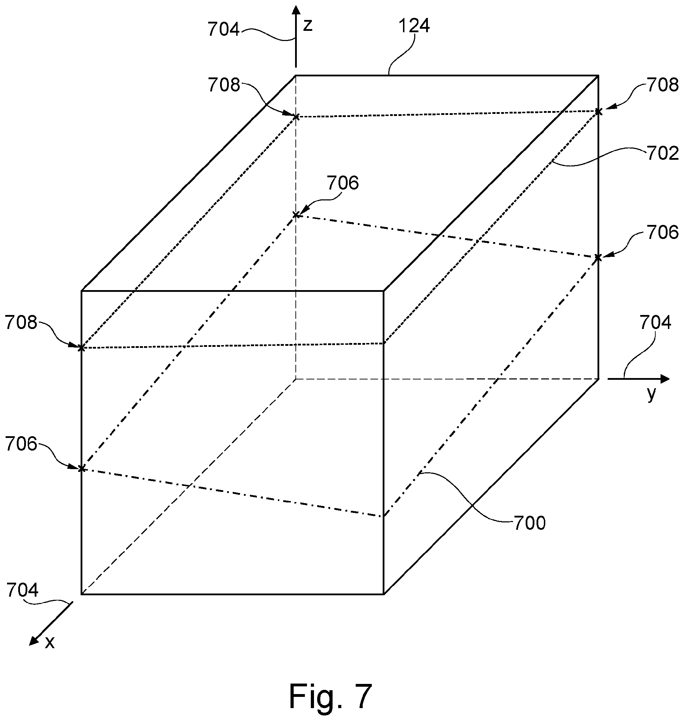

Fig. 7 shows a drawing which represents the three-dimensional medical image 124. The three-dimensional medical image 124 is represented as a rectangular solid. Coordinate axes 704 can be placed along any chosen edges of the three-dimensional medical image 124. There are a variety of ways of choosing the location of three points to define the planes. In this example points are defined by choosing points 706, 708 on edges of the three-dimensional medical image 124. The edges defined a line or path upon which a single coordinate can be used to define a three-dimensional location in space. As such the points 706 and 708 located on these edges can be used to define three points which can be chosen as coordinates for the initial oblique plane 700 and the modified oblique plane 702. This illustrates how three coordinates can be used to define each of these planes 700, 702. The sequence of intermediate coordinates 336 can be constructed by defining a linear transformation which transforms the defined points of the initial oblique plane 706 to the defined points of the modified oblique plane 708.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A `computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

`Computer memory' or 'memory' is an example of a computer-readable storage medium. Computer memory is any memory which is directly accessible to a computational system. `Computer storage' or 'storage' is a further example of a computer-readable storage medium. Computer storage is any non-volatile computer-readable storage medium. In some embodiments computer storage may also be computer memory or vice versa.

A `computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A `user interface' as used herein is an interface which allows a user or operator to interact with a computer or computer system. A `user interface' may also be referred to as a `human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A `hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or `display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface (display)
- 110: memory
- 120: machine executable instructions
- 122: super resolution module
- 124: three-dimensional medical image
- 126: set of initial coordinates (for initial oblique plane)
- 128: initial two-dimensional sectional image
- 130: initial upscaled image (initial oblique multiplanar reconstruction)
- 200: receive a three-dimensional medical image descriptive of internal anatomy of a subject
- 202: receive a set of initial coordinates of an initial oblique plane located within the three-dimensional medical image
- 204: calculate an initial two-dimensional sectional image of the three-dimensional medical image by interpolating the three-dimensional medical image to the initial oblique plane
- 206: receive an initial upscaled image in response to inputting the initial two-dimensional sectional image into the super resolution module
- 208: provide the initial upscaled image as an initial oblique multiplanar reconstruction of the three-dimensional medical image
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio frequency coil
- 316: transceiver
- 318: subject
- 320: subject support
- 330: pulse sequence commands
- 332: k-space data
- 334: set of modified coordinates
- 336: sequence of intermediate coordinates
- 338: sequential two-dimensional sectional image
- 340: sequential upscaled image (intermediate oblique multiplanar reconstruction)
- 400: control the magnetic resonance imaging system with the pulse sequence commands to acquire the k-space data
- 402: reconstruct the three-dimensional magnetic resonance image from the k-space data
- 404: render the initial oblique multiplanar reconstruction on a display
- 406: receive a set of modified coordinates of a modified oblique plane located within the three-dimensional medical image from a user interface
- 408: calculate a sequence of intermediate coordinates by interpolating between the set of initial coordinates and the set of modified coordinates
- 410: calculate a sequential two-dimensional sectional image of the three-dimensional medical image specified by a sequential plane, wherein the sequential plane is specified by the sequence of intermediate coordinates, wherein the two-dimensional sectional image has the first resolution
- 412: receive a sequential upscaled image in response to inputting the sequential two-dimensional sectional image into the super resolution module
- 414: provide a sequential upscaled image as an intermediate oblique multiplanar reconstruction of the three-dimensional medical image
- 416: render the intermediate oblique multiplanar reconstruction on the display to provide an animation during the repeated step through of the sequence of intermediate coordinates
- 500: image processing neural network
- 502: input image
- 504: coordinates
- 506: output image
- 600: image processing neural network
- 602: k-space data
- 700: initial oblique plane
- 702: modified oblique plane
- 704: coordinate axis
- 706: defined points of initial oblique plane
- 708: defined points of modified oblique plane

## Claims

1. A medical system (100, 300) comprising:
- a memory (110) storing machine executable instructions (122) and a super resolution module (124), wherein the super resolution module is configured to output an image at a second resolution in response to receiving the image at a first resolution, wherein the second resolution is higher than the first resolution;
- a computational system (110), wherein execution of the machine executable instructions causes the computational system to:
- receive (200) a three-dimensional medical image (124) descriptive of internal anatomy of a subject (318);
- receive (202) a set of initial coordinates (126) of an initial oblique plane (700) located within the three-dimensional medical image;
- calculate (204) an initial two-dimensional sectional image (128) of the three-dimensional medical image by interpolating the three-dimensional medical image to the initial oblique plane, wherein the initial two-dimensional sectional image has the first resolution;
- receive (206) an initial upscaled image (130) in response to inputting the initial two-dimensional sectional image into the super resolution module; and
- provide (208) the initial upscaled image as an initial oblique multiplanar reconstruction (130) of the three-dimensional medical image.

2. The medical system of claim 1, wherein execution of the machine executable instructions further causes the computational system to:
- render (404) the initial oblique multiplanar reconstruction on a display;
- receive (406) a set of modified coordinates (334) of a modified oblique plane located within the three-dimensional medical image;
- calculate (408) a sequence of intermediate coordinates (336) by interpolating between the set of initial coordinates and the set of modified coordinates;
wherein execution of the machine executable instructions further causes the computational system to step through the sequence of intermediate coordinates repeatedly for each step:
- calculate (410) a sequential two-dimensional sectional image (338) of the three-dimensional medical image specified by a sequential plane, wherein the sequential plane is specified by the sequence of intermediate coordinates, wherein the two-dimensional sectional image has the first resolution;
- receive (412) a sequential upscaled image (340) in response to inputting the sequential two-dimensional sectional image into the super resolution module;
- provide (414) a sequential upscaled image as an intermediate oblique multiplanar reconstruction of the three-dimensional medical image; and
- render (416) the intermediate oblique multiplanar reconstruction on the display to provide an animation during the repeated step through of the sequence of intermediate coordinates.

3. The medical system of claim 2, wherein execution of the machine executable instructions further causes the computational system to step through the sequence of intermediate coordinates to render the intermediate oblique multiplanar reconstruction such that the animation has a frame rate of at least 10 frames per second, preferably has a frame rate of at least 20 frames per second, and most preferably has a frame rate of at least 30 frames per second.

4. The medical system of claim 1, 2, or 3, wherein the super resolution module comprises an image processing neural network (500, 600), wherein the image processing neural network is an image upscaling neural network configured to output an image at a second resolution in response to receiving the image at a first resolution.

5. The medical system of claim 1, 2, or 3, wherein the super resolution module comprises an image processing neural network (500, 600) configured to output an image with an improved image metric in response to receiving an input image, wherein the super resolution module is configured to output an image at a second resolution in response to receiving the image at a first resolution by:
- calculate a first temporary image by interpolating the image received at the first resolution to the second resolution;
- receive a second temporary image with the improved image metric from the image processing neural network in response to inputting the first temporary image; and
- provide the second temporary image as the output image of the super resolution module.

6. The medical system of claim 5, wherein the improved image metric comprises any one of the following: improved sharpness, improved signal-to-noise ratio, reduced blurring, and combinations thereof.

7. The medical system of claim 5 or 6, wherein the super resolution module is configured to adjust the second resolution output by the super resolution module by modifying the interpolation of the first temporary image.

8. The medical system of any one of claims 4 through 7, wherein the image processing neural network is configured to ignore noise.

9. The medical system of any one of claims 4 through 8, wherein the image processing neural network is configured to receive a set of coordinates (504) descriptive of the image received at the first resolution as input.

10. The medical system of any one of claims 4 through 9, wherein the three-dimensional medical image is a three-dimensional magnetic resonance image, wherein the medical system further comprises a magnetic resonance imaging system (302), wherein the memory further stores pulse sequence commands (330) configured for controlling the magnetic resonance imaging system to acquire k-space data (332), wherein the image processing neural network is configured to receive the k-space data as input, wherein execution of the machine executable instructions further causes the computational system to:
- control (400) the magnetic resonance imaging system with the pulse sequence commands to acquire the k-space data; and
- reconstruct (402) the three-dimensional magnetic resonance image from the k-space data.

11. The medical system of claim 10, wherein execution of the machine executable instructions further causes the computational system to input at least a portion of the k-space data into the image processing neural network while inputting the first temporary image into the image processing neural network.

12. The medical system of claim 10 or 11, wherein the image processing neural network is configured to perform any one of the following: perform Gibbs-ringing removal from the image output at the second resolution and perform magnetic resonance imaging artifact removal from the image output at the second resolution.

13. The medical system of any one of claims 1 through 9, wherein the three-dimensional medical image is any one of the following: a three-dimensional computed tomography image, a three-dimensional C-arm computed tomography image, a three-dimensional ultrasound image, a three-dimensional positron emission tomography image, and a three-dimensional single photon emission tomography image.

14. A method of medical imaging, wherein the method comprises:
- receiving (200) a three-dimensional medical image (124) descriptive of internal anatomy of a subject (318);
- receiving (202) a set of initial coordinates (126) of an initial oblique plane (700) located within a three-dimensional medical image (124);
- calculating (204) an initial two-dimensional sectional image (128) of the three-dimensional medical image by interpolating the three-dimensional medical image to the initial oblique plane, wherein the initial two-dimensional sectional image has the first resolution;
- receiving (206) an initial upscaled image (130) in response to inputting the initial two-dimensional sectional image into a super resolution module (122), wherein the super resolution module is configured to output an image at a second resolution in response to receiving the image at a first resolution, wherein the second resolution is higher than the first resolution; and
- providing (208) the initial upscaled image as an initial oblique multiplanar reconstruction (130) of the three-dimensional medical image.

15. A computer program comprising a super resolution module (124) and machine executable instructions (122) for execution by a computational system (110) configured to control a medical system (100, 300), wherein the super resolution module is configured to output an image at a second resolution in response to receiving the image at a first resolution, wherein the second resolution is higher than the first resolution, wherein execution of the machine executable instructions causes the computational system to:
- receive (200) a three-dimensional medical image (124) descriptive of internal anatomy of a subject;
- receive (202) a set of initial coordinates (126) of an initial oblique plane located within the three-dimensional medical image;
- calculate (204) an initial two-dimensional sectional image (128) of the three-dimensional medical image by interpolating the three-dimensional medical image to the initial oblique plane, wherein the initial two-dimensional sectional image has the first resolution;
- receive (206) an initial upscaled image (130) in response to inputting the initial two-dimensional sectional image into the super resolution module; and
- provide (208) the initial upscaled image as an initial oblique multiplanar reconstruction of the three-dimensional medical image.
